# EUROPÄISCHE PATENTSCHRIFT

(11) **EP 3 507 045 B1**
(45) Veröffentlichungstag und Bekanntmachung des Hinweises auf die Patenterteilung: **23.09.2026**
(21) Anmeldenummer: 16788113.5
(22) Anmeldetag: 28.10.2016
(51) Int. Cl.: B23D 17/00, A62B 3/00, B23D 29/00, B23D 31/00, B23D 35/00

(54) **SCHERMESSER UND SCHNEIDGERÄT**
SHEARING BLADE AND CUTTING DEVICE
LAME DE CISAILLEMENT ET OUTIL DE COUPE

(43) Veröffentlichungstag der Anmeldung: 10.07.2019
(73) Patentinhaber: Lukas Hydraulik GmbH, 91058 Erlangen (DE)
(72) Erfinder: TISCHLER, Herbert, 91058 Erlangen (DE); HORNE, Tammy, Gastonia North Carolina 28052 (US); SAUERBIER, Carsten, 91207 Lauf (DE)
(74) Vertreter: Gleim Petri Patent- und Rechtsanwaltspartnerschaft mbB
(86) Internationale Anmeldenummer: PCT/EP2016/076065
(87) Internationale Veröffentlichungsnummer: WO 2018/077418

(56) Entgegenhaltungen:
- EP-A1- 2 636 474
- AT-A4- 511 457
- DE-U1- 202004 012 247
- US-A- 3 146 656

## Beschreibung

Die vorliegende Erfindung betrifft ein Schermesser gemäß dem Oberbegriff des Anspruchs 1 sowie ein tragbares, insbesondere hydraulisches Schneidgerät, vorzugsweise Rettungsgerät, gemäß dem Oberbegriff des Anspruchs 14.

### Technologischer Hintergrund

Hydraulische Arbeitsgeräte für den portablen Einsatz werden üblicherweise von der Feuerwehr für Rettungseinsätze verwendet. Ein gattungsgemäßes hydraulisches Arbeitsgerät ist beispielsweise ein Schneidgerät, welches vor allem zum Schneiden von Karosserieteilen und Fahrzeugtüren eingesetzt wird. Derartige Schneidgeräte besitzen in der Regel eine Hydrauliksteuerung mit einer Hydraulikpumpe, die sich entweder direkt am Schneidgerät oder in einem Einsatzfahrzeug befinden kann. Zudem umfasst das Schneidgerät zwei gegeneinander verschwenkbare Werkzeughälften, die jeweils ein Schermesser zum Zertrennen bzw. Schneiden des Schneidguts, wie z. B. die Säulen einer PKW-Karosserie, umfassen. Die Schermesser besitzen hierbei zueinander orientierte und in der Regel gerade verlaufende Anlageflächen, entlang derer die Schermesser beim Verschwenken, d. h. beim Öffnen und Schließen, aneinander vorbei geführt werden.

An die gattungsgemäßen Schneidgeräte werden zunehmend größere Anforderungen in Bezug auf Schneidwirkung, Belastbarkeit, Haltbarkeit, Gewicht und Energieverbrauch gestellt. Entscheidend sind hierbei vor allem die Schneidwirkung und die Haltbarkeit der Schermesser. Neben der Materialauswahl und damit der Optimierung der Materialeigenschaften des Schermessers trägt vor allem die Geometrie des Schermessers zur Verbesserung der Schneidwirkung bei. Der Fokus liegt hierbei darauf, die Schneidfestigkeit der Messer so zu verbessern, dass mit weniger Leistung gleiches oder stärkeres Material geschnitten werden kann.

### Druckschriftlicher Stand der Technik

Ein Schermesser gemäß dem Oberbegriff des Anspruchs 1 ist aus der EP 2 636 474 A1 bekannt.

Die Patentschrift DE 10 2009 059 940 B4 beschreibt ein Schermesser für Schneidgeräte zum Zerschneiden oder Durchtrennen von profilierten Baustählen. Die Schermesser sind mit austauschbaren Schneideinsätzen ausgestattet. Die Schneideinsätze sind hierbei in einer zweiseitig offenen Aufnahmetasche untergebracht und durch mehrere Spannpratzen gehalten. Die Spannpratzen bewirken mittels Schrauben- und Arretierstifte eine Schraub- und Stiftverbindung zwischen dem Schermesser und dem Schneideinsatz. Diese Spannpratzen werden über eine zusätzliche Ausnehmung am Schneideinsatz angebracht und benötigen dadurch einen zusätzlichen Formschluss. Die Aufnahmetasche ist hierbei derart ausgestaltet, dass der Schneideinsatz parallel zur Anlagefläche des Schermessers in die Aussparung einschiebbar ist. Aufgrund des komplizierten Aufbaus des Schneideinsatzes und der Aufnahmetasche und der komplexen Befestigung mit Spannpratzen und Stiften oder Schrauben ergeben sich zusätzliche Probleme bezüglich der Fertigungszeit und der Fertigungskosten. Ferner kann die Funktionalität und die Haltbarkeit verringert sein, indem die zusätzlichen Ausnehmungen am Schneideinsatz einen zusätzlichen Formschluss mit den Spannpratzen erzeugen, der zu Spannungen im Bereich der Befestigungsmittel führt, wobei ein Materialbruch die Folge sein kann.

Die Druckschrift AT 511 457 A4 beschreibt ein Schermesser für ein Schneidgerät, welches innerhalb eines Sitzes des Schermessers einen Messereinsatz umfasst, der als Schneidkeil ausgebildet ist. Der Schneidkeil bildet hierbei eine Schneidkante, indem von der Schneidkante aus eine Freifläche d. h. eine Anlagefläche und eine dazu winkelig verlaufende Druckfläche d. h. Außenfläche vorgesehen sind. Die Außenfläche ist hierbei durchgehend gerade mit gleichbleibender Neigung ausgestaltet. Der Messereinsatz wird parallel zur Anlagefläche eingeschoben und bildet einen quer zur Freifläche wirkenden Formschluss entlang einer abgeschrägten Formschlussfläche, die sich am unteren Ende des Sitzes befindet. Ferner ist der Messereinsatz mittels quer zur Freifläche orientierten, in fluchtenden Bohrungen im Grundkörper des Schermessers und im Messereinsatz angeordneten stiftförmigen Steckverbindungen am Grundkörper befestigt. Durch den spitzen Aufbau des Messereinsatzes erhöht sich die Bruchgefahr, da sich bei aufbauendem Druck die beiden Schermesser gegeneinander verdrehen. Die Spitze des Schermessers wirkt hierbei jeweils als Drehpunkt, d. h. daraus resultiert ein erhöhtes Risiko eines Ausbrechens der Schneidkante des Messereinsatzes während des Schneidvorgangs. Zudem wird die Kraft bzw. der Druck, der durch das Zerschneiden des Schneidguts auf den Messereinsatz übertragen wird, entweder auf die Steckverbindung oder keilartig auf die Formschlussfläche unterhalb des Messereinsatzes übertragen, wodurch es in beiden Fällen zu Spannungsspitzen und damit zum Materialbruch und damit zu einer verringerten Haltbarkeit kommt.

### Aufgabe der vorliegenden Erfindung

Die Aufgabe der vorliegenden Erfindung besteht darin, ein gattungsgemäßes Schermesser mit einem neuartigen Aufbau zur Verfügung zu stellen, bei welchem die Schneidwirkung, die Standfestigkeit sowie die Haltbarkeit verbessert werden.

### Lösung der Aufgabe

Die vorstehende Aufgabe wird durch die gesamte Lehre des Anspruchs 1 gelöst. Zweckmäßige Ausgestaltungen der Erfindung sind in den Unteransprüchen beansprucht.

Erfindungsgemäß erstreckt sich ein erster Flächenabschnitt der Außenfläche von der Schneidkante weg entlang einer Orthogonalen O, welche im Bereich der Schneidkante auf die Anlagefläche trifft, oder in einem spitzen Winkel α bezogen auf die Orthogonale O. Ferner schließt sich ein zweiter Flächenabschnitt an das Ende des ersten Flächenabschnitts an und ist ausgehend vom ersten Flächenabschnitt in einem spitzen Winkel β, bezogen auf die Orthogonale O, orientiert. An das Ende des zweiten Flächenabschnitts schließt sich ein dritter Flächenabschnitt an, der in einem spitzen Winkel γ, bezogen auf die Orthogonale O, orientiert ist. Darüber hinaus ist der Winkel a kleiner als der Winkel β und der Winkel β ist kleiner als der Winkel γ. Daraus resultiert der Vorteil, dass eine Druckeinsparung im Bereich der Schneidfläche des Schermessers erfolgt. Das Risiko eines Ausbrechens der Schneidkante wird dadurch verringert und die Standfestigkeit sowie die Haltbarkeit des Schermessers erhöht.

Zweckmäßigerweise kann jeweils im Querschnitt des Schermessers betrachtet die Breite des ersten Flächenabschnitts geringer als die Breite des zweiten Flächenabschnitts und die Breite des zweiten Flächenabschnitts geringer als die Breite des dritten Flächenabschnitts sein. Dadurch, dass der erste Flächenabschnitt eine sehr geringe Breite aufweist, kann das Risiko eines Abrutschens bzw. Ausbrechens der Schneidkante vor allem bei hochfestem Material weitestgehend vermieden werden, jedoch die den Schneidvorgang begünstigende Keilwirkung der ersten abgewinkelten genutzt werden, um das Schneidgut zu zertrennen.

Ferner kann der Winkel α in einem Bereich von 0,5 bis 5°, vorzugsweise in einem Bereich von 1 bis 3°, besonders vorzugsweise in einem Bereich von 1,5 bis 2,5° liegen. Bei Verwenden eines sehr kleinen Winkels α resultiert überraschend der Effekt, dass eine Druckeinsparung erfolgt, z. B. 3-8 % Druckeinsparung eines Winkels von α=2° im Vergleich zu einem Winkel α=0°.

Zweckmäßigerweise kann der Winkel γ größer 45°, vorzugsweise größer/gleich 48°, besonders vorzugsweise größer/gleich 50° sein. Dadurch wird die Schneidwirkung des Schermessers noch zusätzlich verbessert. Überraschend hat sich gezeigt, dass mit einem Winkel von y=50° eine besonders gute Schneidwirkung erzielt werden kann. Der Winkel γ beträgt maximal 80°, vorzugsweise 70°, besonders vorzugsweise 60°.

Erfindungsgemäß ist im Bereich der Außenfläche eine Oberflächenprofilierung vorgesehen. Durch das Einbringen einer Profilierung wird die Schneidkraft auf das zu schneidende Material in einen höheren Schneiddruck umgewandelt. Hierdurch wird das zu schneidende Material einer größeren Beanspruchung ausgesetzt und es kommt zu einem früheren Versagen.

Erfindungsgemäß ist die Oberflächenprofilierung lediglich im Bereich des zweiten und/oder dritten Flächenabschnitts, vorzugsweise im Bereich beider Flächenabschnitte vorgesehen, im Bereich des ersten Flächenabschnitts soll keine Oberflächenprofilierung vorgesehen sein. Der erste Flächenabschnitt dient hierbei dazu, das Schneidgut in Richtung zum Schneidgerät zu ziehen, sodass der Hauptschneiddruck durch den hinteren Teil des Schneidbereichs auf das Schneidgut erfolgt. Dadurch wird die Schneidwirkung in besonderem Maße erhöht. Eine Oberflächenprofilierung innerhalb des ersten Flächenabschnitts hingegen erschwert die Zugwirkung des Schneidgerätes.

Ferner kann sich die Oberflächenprofilierung über die jeweils gesamte Breite des jeweiligen Flächenabschnitts erstrecken. Dadurch kann eine möglichst gleichmäßige Krafteinwirkung erfolgen. Zudem werden zusätzliche Spannungsunterschiede durch unterschiedlich ausgestaltete Flächenbereiche der Außenkante des Schermessers verhindert.

Erfindungsgemäß umfasst die Oberflächenprofilierung einzelne nebeneinander verlaufende Nuten, wobei die Nuten jeweils zwei gegenüberliegende Nutwandungen aufweisen. Eine derartige Oberflächenprofilierung hat einen besonders hervorzuhebenden Effekt in Bezug auf die Druckeinsparung am Schermesser gezeigt, der im Bereich von 3-8 % im Vergleich zu herkömmlich ausgestalteten Schermessern liegt.

Vorzugsweise sind die gegenüberliegenden Nutwandungen einer Nut derart ausgestaltet, dass eine Nutwandung steil, vorzugsweise gekrümmt und die andere Nutwandung abgeflacht verläuft. Die steil verlaufende Nutwandung ist hierbei jeweils auf der Seite der Nut angeordnet, die der Messerspitze des Schermessers zugewandt ist, sodass die Nuten eine Vorzugsorientierung aufweisen, indem die Nutwandungen von der Messerspitze wegorientiert ausgestaltet sind. Daraus resultiert der Vorteil, dass das Einziehen des Schneidguts zum Beginn des Schneidvorgangs sowie das Festhalten des Schneidguts im hinteren Teil des Schneidbereichs während des Schneidvorgangs begünstigt werden.

Alternativ oder zusätzlich sind die Nuten wellen- oder sägezahnartig, u-förmig, v-förmig oder trapezförmig ausgestaltet.

Zweckmäßigerweise kann die Schneidkante konkav gekrümmt sein. Daraus resultiert der Vorteil, dass das Schneidgut während des Schneidvorgangs, zumindest zu Beginn des Schneidvorgangs, in Richtung Schneidgerät gezogen wird. Die Schneidwirkung wird dadurch in besonderem Maße verbessert.

In bevorzugter Weise ist das Schermesser als Schmiedeteil gefertigt oder wird z. B. aus einem Halbzeug oder einer Materialplatte gefräst.

Das Schermesser kann in einfacher Weise am Schneidgerät montiert werden, indem der Montagebereich eine Durchgangsöffnung zur Aufnahme eines einem Schermesserpaars gemeinsamen Drehachsenelements, z. B. ein Zentralbolzen, und eine Durchgangsöffnung zur Aufnahme eines antriebsseitigen Betätigungselements, z. B. ein Sicherungsbolzen mit dem das Schermesser an ein Hebelglied eines Werkzeugarmes befestigt wird, besitzt.

Zweckmäßigerweise kann der Schneidbereich eine Aussparung zur Aufnahme eines Schneideinsatzes aufweisen. Die Aussparung befindet sich praktischerweise zumindest teilweise im mittleren und hinteren Teil des Schneidbereichs, der dazu dient, den Hauptschneiddruck auf das Schneidgut zu übertragen. Der Schneidbereich befindet sich vorzugsweise bündig in der Aussparung.

Ferner kann die Aussparung derart ausgestaltet sein, dass der Schneideinsatz in einem spitzen Winkel δ zur Anlagefläche des Schermessers in die Aussparung einschiebbar ist. Dadurch kann der Schneideinsatz in besonders einfacher Weise in das Schermesser eingesetzt werden. Zudem ermöglicht diese Maßnahme eine vorteilhafte Kraftaufnahme durch den Messerkörper. Spannpratzen werden nicht benötigt.

Vorzugsweise ist mindestens ein Befestigungselement vorgesehen, dessen Orientierung in einem schrägen Winkel ε, d. h. vorzugsweise in einem spitzen Winkel ε zur Anlagefläche in Richtung Schneidkante betrachtet verläuft. Daraus resultiert der Vorteil, dass der Druck, der durch das Zerschneiden des Schneidguts auf den Messereinsatz übertragen wird, nicht auf die Steckverbindung sondern auf die Formschlussfläche unterhalb des Messereinsatzes übertragen wird, wodurch das Risiko eines Materialbruchs verringert und damit die Haltbarkeit erhöht wird. Vorzugsweise ist das Befestigungselement senkrecht zur Einschubrichtung des Schneideinsatzes orientiert.

Zweckmäßigerweise kann an mindestens einer, vorzugsweise an beiden Seiten der Aussparung eine Hinterschneidung vorgesehen sein, die dazu dient, den Schneideinsatz geführt und durch eine einfache Bewegung in die Aussparung einzusetzen und in Position zu halten. Das Wechseln des Schneideinsatzes wird dadurch besonders vereinfacht.

Zudem beansprucht die vorliegende Erfindung ein tragbares, insbesondere hydraulisches Schneidgerät für den portablen Einsatz, vorzugsweise Rettungsgerät, mit einem Gehäuse sowie einem, vorzugsweise manuell bedienbarem, hydraulischen Steuerventil, und zwei mit einer Drehachse verbundene Werkzeughälften, wobei mindestens eine der Werkzeughälften ein erfindungsgemäßes Schermesser umfasst, bei dem sich ein erster Flächenabschnitt der Außenfläche von der Schneidkante in einem spitzen Winkel α erstreckt (bezogen auf die Orthogonale O, die im Bereich der Schneidkante auf die Anlagefläche trifft) und sich ein zweiter Flächenabschnitt an das Ende des ersten Flächenabschnitts anschließt und in einem spitzen Winkel β bezogen auf die Orthogonale O orientiert ist und sich ein dritter Flächenabschnitt an das Ende des zweiten Flächenabschnitts anschließt und in einem spitzen Winkel γ bezogen auf die Orthogonale O orientiert ist. Hierbei ist der Winkel α kleiner als der Winkel β und der Winkel β kleiner als der Winkel γ.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine stark vereinfachte perspektivische Darstellung eines erfindungsgemäßen Schneidgerätes;
- Fig. 2: eine vereinfachte perspektivische Darstellung eines erfindungsgemäßen Schermessers;
- Fig. 3: eine vereinfachte, lediglich schematische Querschnittdarstellung durch ein erfindungsgemäßes Schermesser;
- Fig. 4a: eine vereinfachte perspektivische Querschnittdarstellung durch einen Teil einer Ausgestaltung der erfindungsgemäßen Oberflächenprofilierung;
- Fig. 4b: eine zweite vereinfachte perspektivische Querschnittdarstellung durch einen Teil einer zweiten Ausgestaltung der erfindungsgemäßen Oberflächenprofilierung;
- Fig. 5: eine vereinfachte perspektivische Darstellung eines erfindungsgemäßen Schermessers mit Schneideinsatz;
- Fig. 6a: eine vereinfachte perspektivische Teildarstellung des erfindungsgemäßen Schermessers aus Fig. 5 mit fehlendem Schneideinsatz;

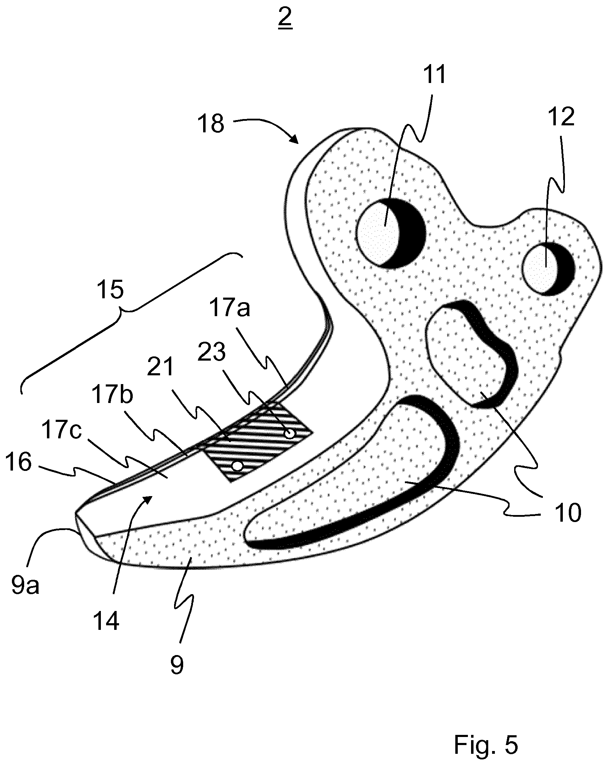

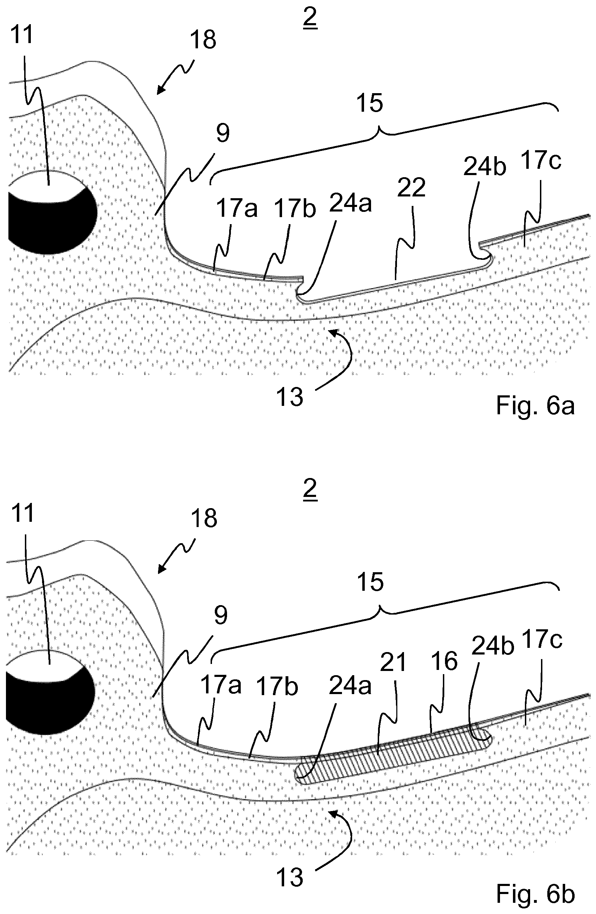

- Fig. 6a: eine zweite vereinfachte perspektivische Teildarstellung des erfindungsgemäßen Schermessers aus Fig. 5 mit eingesetztem Schneideinsatz, sowie

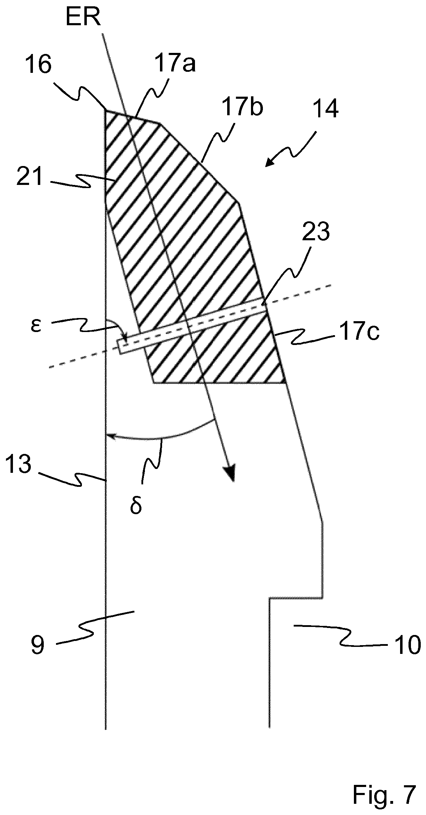

- Fig. 7: eine vereinfachte, lediglich schematische Querschnittdarstellung durch das erfindungsgemäße Schermesser aus Fig. 5.

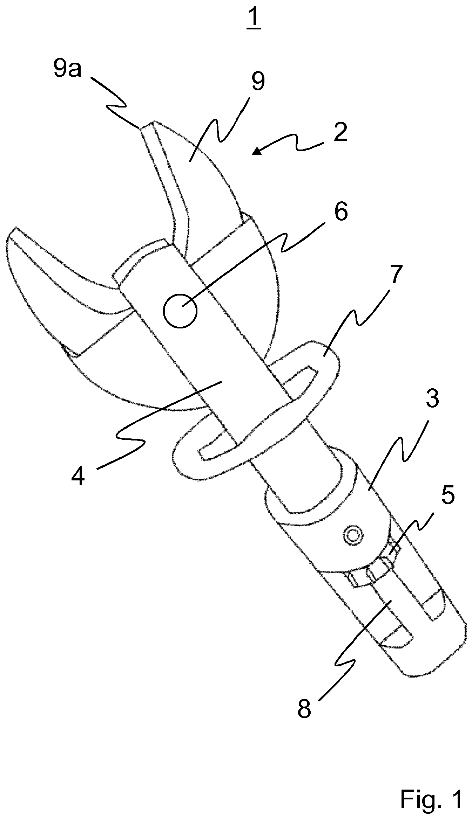

Bezugsziffer 1 in Fig. 1 bezeichnet ein portables Schneidgerät zum Schneiden und Durchtrennen von Karosserieteilen und Fahrzeugtüren. Das Schneidgerät 1 besitzt ein Gehäuse 3 und ein Hydraulikzylinder 4, an dem zwei Werkzeughälften angebracht sind, welche jeweils ein Schermesser 2 mit einem Messerkörper 9 und einer daran befindlichen Messerspitze 9a umfassen. Die Schermesser 2 sind an einer gemeinsamen Drehachse 6 angeordnet, sodass die Schermesser 2 gegeneinander verschwenkt werden können. Ferner sind im Bereich des Gehäuses 3 und/oder des Hydraulikzylinders 4 ein Tragegriff 7 und ein Handgriff 8 zum Tragen des Schneidgeräts 1 angeordnet. Zudem befindet sich im Bereich des Handgriffs 8 ein manuell bedienbares Steuerventil 5, welches dem Anwender ermöglicht, das Schneidgerät manuell zu bedienen (Schneiden, Öffnen sowie Leerlauf).

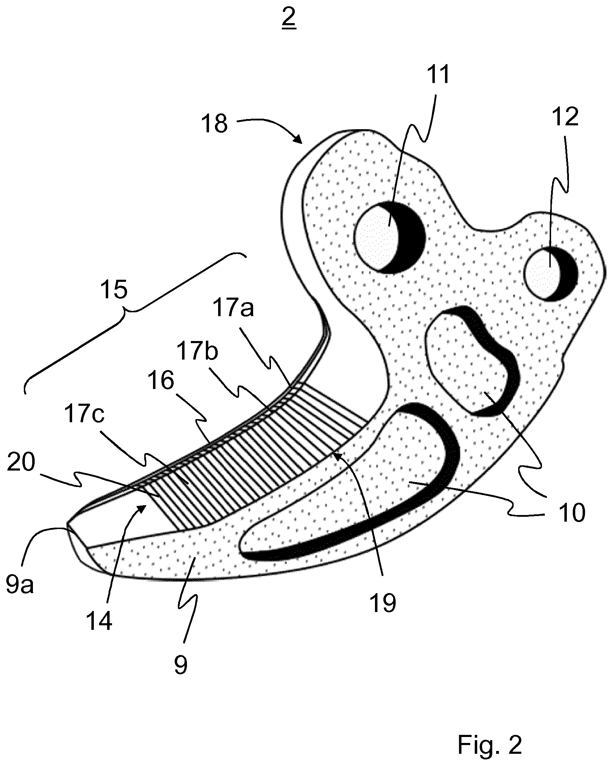

In Fig. 2 ist das erfindungsgemäße Schermesser 2 des Schneidgeräts 1 im Detail dargestellt. Der Messerkörper 9 kann vorzugsweise als Schmiedeteil gefertigt sein oder aus einem Halbzeug oder einer Materialplatte gefräst werden. Der Messerkörper 9 umfasst Ausnehmungen 10, die zur Gewichtsreduzierung des Schermessers 2 dienen. Ferner besitzt das Schermesser 2 einen Montagebereich 18 mittels dem das Schermesser 2 am Schneidgerät 1 montiert werden kann. Der Montagebereich 18 umfasst eine Durchgangsöffnung 11, die dazu dient, ein, in Fig. 2 nicht dargestelltes, Drehachselement, z. B. einen Zentralbolzen, aufzunehmen, um das Schermesser 2 an der gemeinsamen Drehachse 6 zu befestigen. Zudem umfasst der Monatebereich 18 eine Durchgangsöffnung 12, die ein, in Fig. 2 nicht dargestelltes, antriebseitiges Betätigungselement aufnehmen kann, z. B. einen Sicherungsbolzen, mittels dem das Schermesser 2 an einem Hebelglied eines Werkzeugarmes montiert werden kann, um das Schermesser 2 anzusteuern.

Das Schermesser 2 umfasst einen vorzugsweise konkaven Schneidbereich 15, der zum Schneiden und Trennen des Schneidguts dient. Das Schneidgut wird hierbei durch eine Schneidkante 16 geschnitten und entlang einer Außenfläche 14 des Messerkörpers 9 auseinander gedrückt. Die Außenfläche 14 umfasst erfindungsgemäß einen ersten Flächenabschnitt 17a, der sich von der Schneidkante 16 aus erstreckt. An das Ende des ersten Flächenabschnitts 17a schließt sich ein zweiter Flächenabschnitt 17b an, an dem sich ein dritter Flächenabschnitt 17c anschließt.

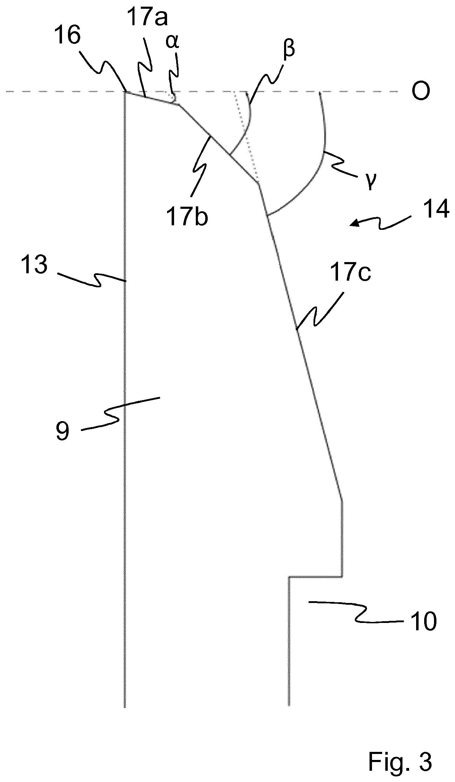

Fig. 3 zeigt einen Querschnitt durch ein erfindungsgemäßes Schermesser 2 im mittleren Schneidbereich 15. Bezugsziffer 13 bezeichnet eine der Außenfläche 14 gegenüberliegende Anlagefläche. Beim Öffnen und Schließen des Schermesserpaares eines Schneidgeräts 1 werden die Schermesser 2 entlang ihrer Anlageflächen 13 aneinander vorbeigeführt. Der erste Flächenabschnitt 17a erstreckt sich von der Schneidkante 16 aus in einem geringen Winkel α bezogen auf die Orthogonale O. Die Orthogonale O verläuft hierbei senkrecht zur Anlagefläche 13 und trifft auf diese im Bereich der Schneidkante 16. Der Winkel α beträgt vorzugsweise 0,5°, 1,0°, 1,5°, 2,0° oder 2,5°. Der sich an dem ersten Flächenabschnitt 17a anschließende zweite Flächenabschnitt 17b erstreckt sich in einem spitzen Winkel β, bezogen auf die Orthogonale O. Der Winkel β liegt hierbei vorzugsweise im Bereich von 15° bis 35°, vorzugsweise von 20° bis 25°. An den zweiten Flächenabschnitt 17b schließt sich der dritte Flächenabschnitt 17c an, der bezogen auf die Orthogonale O in einem spitzen Winkel γ orientiert ist. Der Winkel γ beträgt vorzugsweise 40°, 45° oder 50°. Demgemäß ist der Winkel α kleiner als der Winkel β und der Winkel β kleiner als der Winkel γ. Der Winkel γ beträgt maximal 80°, vorzugsweise 70°, besonders vorzugsweise 60°.

Die Breite des ersten Flächenabschnitts 17a liegt vorzugsweise im Bereich von 0,5 bis 1,5 mm, besonders vorzugsweise liegt die Breite des ersten Flächenabschnitts 17a im Bereich von 0,5 mm bis 0,7 mm. Im Querschnitt des Schermessers 2 betrachtet, ist die Breite des ersten Flächenabschnitts 17a geringer als die Breite des zweiten Flächenabschnitts 17b und die Breite des zweiten Flächenabschnitts 17b geringer als die Breite des dritten Flächenabschnitts 17c.

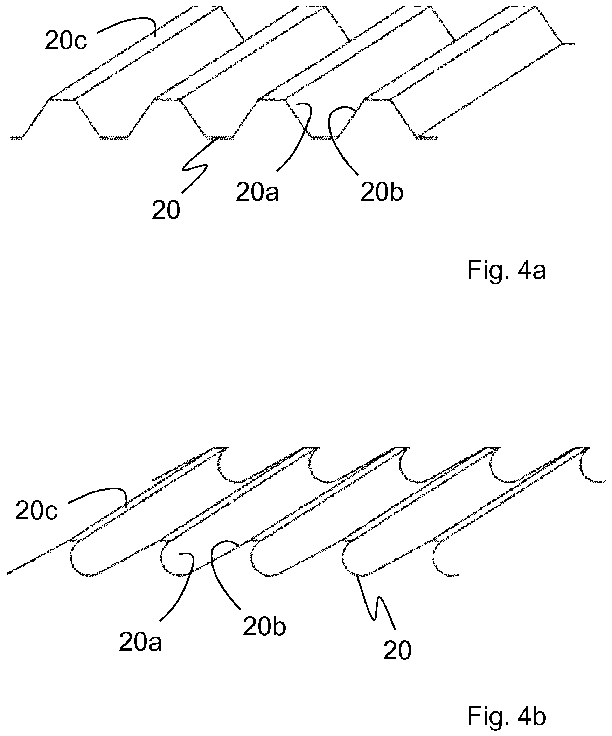

Das Schermesser 2 in Fig. 2 weist im Schneidbereich 15 eine Oberflächenprofilierung 19 auf. Die Oberflächenprofilierung 19 kann beispielsweise aus in Fig. 4a dargestellten nebeneinander verlaufenden Nuten 20 bestehen. Die Nuten 20 umfassen jeweils zwei gegenüberliegende Nutwandungen 20a, 20b und sind trapezförmig ausgebildet, wobei die jeweiligen Trapeze oberseitige Plateaus 20c ausbilden, die die Oberflächenprofilierung 19 nach Außen, d. h. zum Schneidgut hin, begrenzen. Durch das Einbringen derartiger Nuten 20 wird die Schneidkraft auf das zu schneidende Material in einen höheren Schneiddruck umgewandelt. Hierdurch wird das zu schneidende Material einer größeren Beanspruchung ausgesetzt und es kommt zu einem früheren Versagen. Durch die Ausgestaltung der Außenfläche 14 mit derartigen Nuten 20 erfolgt in der Regel eine Druckeinsparung um 3-8 %. Somit besteht die Möglichkeit, bei gleichbleibender Kraft und gleichbleibendem Gewicht die Schneidleistung zu steigern.

Zweckmäßigerweise befindet sich die Oberflächenprofilierung 19 lediglich im Bereich des zweiten und dritten Flächenabschnitts 17b, 17c, vorzugsweise über die gesamte Breite des jeweiligen Flächenabschnitts 17b und/oder 17c verlaufend. Diese Ausgestaltung hat den Vorteil, dass das Schneidgut zu Beginn des Schneidvorgangs entlang der Schneidkante 16 in Richtung zu der Drehachse 6 gezogen wird, sodass der Hauptschneiddruck durch den hinteren Teil des Schneidbereichs 15 auf das Schneidgut erfolgt. Im Bereich des ersten Flächenabschnitts 17a ist keine Oberflächenprofilierung 19 vorgesehen. Das Einziehen des Schneidguts in Richtung Schneidgerät 1 wird ferner dadurch begünstigt, dass die Schneidkante 16 konkav gekrümmt ist.

Um den Effekt des Einziehens des Schneidguts weiter zu verbessern, d. h. das Einziehen auch während des anfänglichen Schneidvorgangs zu ermöglichen, kann eine spezielle Ausgestaltung der Oberflächenprofilierung 19 bzw. der Nuten 20 gemäß Fig. 4b vorgenommen werden. Die Nuten 20 besitzen hierbei eine Nutwandung 20a, die steil und gekrümmt verläuft, und eine Nutwandung 20b, die abgeflacht verläuft. Derartige Nuten 20 können beispielsweise mit einem Prismenfräser, der schräg an das Material angestellt wird, eingefräst werden. Je nachdem wie der Abstand der eingefrästen Nuten 20 gewählt wird, befinden sich zwischen den Nuten 20 Plateaus 20c, welche die Oberflächenprofilierung 19 zu der dem Schneidgut zugewandten Seite hin begrenzen.

Fig. 5 zeigt eine zweite Ausgestaltung des erfindungsgemäßen Schermessers 2. Das Schermesser 2 besitzt hierbei im mittleren und hinteren Teil des Schneidbereichs 15 einen Schneideinsatz 21. Der Übersichtlichkeit halber ist in Fig. 5 keine Oberflächenprofilierung 19 dargestellt, die jedoch auch bei dieser Ausgestaltung gemäß Fig. 5 vorhanden sein kann. Der Schneideinsatz 21 ist über Befestigungselemente 23 am Messerkörper 9 des Schermessers 2 befestigt. Als Befestigungselement 23 können z. B. Schrauben, Bolzen oder dergleichen eingesetzt werden. Der Schneideinsatz 21 wird in dem Bereich des Schneidbereichs 15 eingesetzt, welcher beim Schneiden den größten Belastungen ausgesetzt ist und somit am ehesten verschleißt. Dadurch kann, im Falle eines Verschleißens dieses Bereichs, der Schneideinsatz 21 ausgewechselt werden und somit die Funktion des Schermessers 2 wiederhergestellt werden, ohne dass das gesamte Schermesser 2 gewechselt werden muss. Zudem kann der Schneideinsatz 21 aus härterem bzw. widerstandsfähigerem Material als das Grundmaterial des Schermessers 2 gefertigt werden, um das Risiko des Verschleißens zu verringern und die Schneidkraft zu verbessern. Dadurch kann die Schneidwirkung und die Haltbarkeit des gesamten Schermessers 2 bei nahezu gleich bleibenden Kosten und Gewicht verbessert werden. Der Schneideinsatz 21 kann zudem ebenfalls, in Fig. 5 nicht dargestellte, Flächenabschnitte 17a, 17b, 17c umfassen.

Zweckmäßigerweise besitzt das Schermesser 2 im Bereich des Schneidbereichs 15 eine in Fig. 6a dargestellte Aussparung 22, die zur Aufnahme des Schneideinsatzes 21 dient. Die Aussparung 22 besitzt stirnseitige Hinterschneidungen 24a, 24b, die dazu vorgesehen sind, den Schneideinsatz 21 in Position zu halten und/oder diesen beim Einschieben zu führen. Der Schneideinsatz 21 sowie die Aussparung 22 sind, wie in Fig. 6b gezeigt, derart gefertigt, dass zwischen Schneideinsatz 21 und Aussparung 22 ein Formschluss entsteht, sobald der Schneideinsatz 21 in die Aussparung 22 vollständig eingesetzt bzw. eingeschoben ist. Der Formschluss dient hierbei dazu, den weitaus größten Anteil an Schubspannungen, die während des Schneidens auftreten, durch Druckspannungen auf die Bauelemente des Schermessers 2 zu beaufschlagen.

Der Schneideinsatz 21 wird, wie in Fig. 7 gezeigt, in einem vorzugsweise spitzen Winkel δ zur Anlagefläche 13 eingeschoben. Die Einschubrichtung ER des Schneideinsatzes 21 ist in Fig. 7 mit einem schwarzen Pfeil markiert. Der Schneideinsatz 21 bildet hierbei einen Teil der Außenfläche 14 und umfasst demgemäß, wie auch die Außenfläche 14, drei Flächenabschnitte 17a, 17b, 17c. Nach dem Einschieben des Schneideinsatzes 21 wird der Schneideinsatz 21 über Befestigungselemente 23 am Messerkörper 9 befestigt. Die Orientierung des Befestigungselements 23 verläuft hierbei in einem spitzen Winkel ε zur Anlagefläche 13 bzw. im Wesentlichen senkrecht zur Einschubrichtung ER. Die Befestigung ist hierbei geometrisch derart konzipiert, dass diese den Schneideinsatz 21 innerhalb der Aussparung 22 in Position halten, jedoch möglichst wenig Belastung, wie z. B. Kerbspannungsspitzen oder hohe Schubspannungen, ertragen müssen, indem der größere Teil der Belastungen, z. B. in Form von Druckspannung, auf den Messerkörper 9 durch den Formschluss zwischen Schneideinsatz 21 und Aussparung 22 beaufschlagt wird.

### BEZUGSZEICHENLISTE

- 1: Schneidgerät
- 2: Schermesser
- 3: Gehäuse
- 4: Hydraulikzylinder
- 5: Steuerventil
- 6: Drehachse
- 7: Traggriff
- 8: Handgriff
- 9: Messerkörper
- 9a: Messerspitze
- 10: Ausnehmung
- 11: Durchgangsöffnung
- 12: Durchgangsöffnung
- 13: Anlagefläche
- 14: Außenfläche
- 15: Schneidbereich
- 16: Schneidkante
- 17a: erster Flächenabschnitt
- 17b: zweiter Flächenabschnitt
- 17c: dritter Flächenabschnitt
- 18: Montagebereich
- 19: Oberflächenprofilierung
- 20: Nut
- 20a: Nutwandung
- 20b: Nutwandung
- 20c: Plateau
- 21: Schneideinsatz
- 22: Aussparung
- 23: Befestigungselement
- 24a: Hinterschneidung
- 24b: Hinterschneidung

- O: Orthogonale
- ER: Einschubrichtung
- α: Winkel
- β: Winkel
- γ: Winkel
- δ: Winkel
- ε: Winkel

## Patentansprüche

1. Schermesser (2) für ein tragbares, insbesondere hydraulisches, Schneidgerät, vorzugsweise Rettungsgerät,
mit einem Messerkörper (9), wobei der Messerkörper (9) einen Montagebereich (18) sowie einen Schneidbereich (15) aufweist;
mit einer Schneidkante (16) im Schneidbereich (15);
mit einer auf der einen Seite der Schneidkante (16) befindlichen Anlagefläche (13) für ein weiteres Schermesser sowie einer auf der anderen Seite der Schneidkante (16) befindlichen Außenfläche (14), welche dazu vorgesehen ist, auf das Schnittgut einzuwirken;
wobei sich ein erster Flächenabschnitt (17a) der Außenfläche (14) von der Schneidkante (16) weg entlang der Orthogonale O erstreckt, die im Bereich der Schneidkante (16) auf die Anlagefläche (13) trifft, oder wobei sich ein erster Flächenabschnitt (17a) der Außenfläche (14) von der Schneidkante (16) weg in einem spitzen Winkel α bezogen auf die Orthogonale O erstreckt;
wobei sich ein zweiter Flächenabschnitt (17b) an das Ende des ersten Flächenabschnitts (17a) anschließt und in einem spitzen Winkel β bezogen auf die Orthogonale O orientiert ist;
wobei sich ein dritter Flächenabschnitt (17c) an das Ende des zweiten Flächenabschnitts (17b) anschließt und in einem spitzen Winkel γ bezogen auf die Orthogonale O orientiert ist, wobei
der Winkel α kleiner als der Winkel β und der Winkel β kleiner als der Winkel γ ist, **dadurch gekennzeichnet, dass**
eine Oberflächenprofilierung (19) lediglich im Bereich des zweiten und/oder dritten Flächenabschnitts (17b, 17c) der Außenfläche (14), vorzugsweise im Bereich beider Flächenabschnitte (17b, 17c) der Außenfläche (14) vorgesehen ist, wobei die Oberflächenprofilierung (19) einzelne nebeneinander verlaufende Nuten (20) umfasst.

2. Schermesser nach Anspruch 1, **dadurch gekennzeichnet, dass** jeweils im Querschnitt des Schermessers betrachtet die Breite des ersten Flächenabschnitts (17a) geringer ist als die Breite des zweiten Flächenabschnitts (17b) und die Breite des zweiten Flächenabschnitts (17b) geringer ist als die Breite des dritten Flächenabschnitts (17c).

3. Schermesser nach Anspruch 1 oder 2, **dadurch gekennzeichnet, dass** der Winkel α in einem Bereich von 0,5° bis 5°, vorzugsweise in einem Bereich von 1° bis 3°, besonders vorzugsweise in einem Bereich von 1,5° bis 2,5° liegt.

4. Schermesser nach mindestens einem der vorhergehenden Ansprüche, **dadurch gekennzeichnet, dass** der Winkel γ größer/gleich 45°, vorzugsweise größer/gleich 48°, besonders vorzugsweise größer/gleich 50° ist.

5. Schermesser nach Anspruch 1, **dadurch gekennzeichnet, dass** sich die Oberflächenprofilierung (19) über die jeweils gesamte Breite des jeweiligen Flächenabschnitts (17b und/oder 17c) erstreckt.

6. Schermesser nach Anspruch 1, **dadurch gekennzeichnet, dass** die Nuten (20) jeweils zwei gegenüberliegende Nutwandungen (20a, 20b) aufweisen, eine Nutwandung (20a) steil, vorzugsweise gekrümmt und die andere Nutwandung (20b) abgeflacht verläuft, wobei die steil verlaufende Nutwandung (20a) auf der Seite der jeweiligen Nut (20) angeordnet ist, die der Messerspitze (9a) des Schermessers (2) zugewandt ist.

7. Schermesser nach Anspruch 1 oder 6, **dadurch gekennzeichnet, dass** die Nut (20) u-förmig, v-förmig oder trapezförmig ausgebildet ist.

8. Schermesser nach mindestens einem der vorhergehenden Ansprüche, **dadurch gekennzeichnet, dass** die Schneidkante (16) konkav gekrümmt ist.

9. Schermesser nach mindestens einem der vorhergehenden Ansprüche, **dadurch gekennzeichnet, dass** der Montagebereich (18) eine Durchgangsöffnung (11) für die Aufnahme eines einem Schermesserpaars gemeinsamen Drehachsenelements und eine Durchgangsöffnung (12) für ein antriebsseitiges Betätigungselement vorgesehen ist.

10. Schermesser nach mindestens einem der vorhergehenden Ansprüche, **dadurch gekennzeichnet, dass** der Schneidbereich (15) eine Aussparung (22) zur Aufnahme eines Schneideinsatzes (21) aufweist.

11. Schermesser nach Anspruch 10, **dadurch gekennzeichnet, dass** die Aussparung (22) derart ausgestaltet ist, dass der Schneideinsatz (21) in einem spitzen Winkel δ zur Anlagefläche (13) des Schermessers (2) in die Aussparung (22) einschiebbar ist.

12. Schermesser nach Anspruch 10 oder 11, **dadurch gekennzeichnet, dass** mindestens ein Befestigungselement (23) vorgesehen ist, dessen Orientierung in einem schrägen Winkel ε zur Anlagefläche (13), vorzugsweise in einem spitzen Winkel ε zur Anlagefläche (13) in Richtung Schneidkante (16) betrachtet, verläuft.

13. Schermesser nach einem der Ansprüche 10 bis 12, **dadurch gekennzeichnet, dass** an mindestens einer, vorzugsweise an beiden Seiten der Aussparung (22) eine Hinterschneidung (24a, 24b) vorgesehen ist.

14. Tragbares, insbesondere hydraulisches Schneidgerät (1) für den portablen Einsatz, vorzugsweise Rettungsgerät, mit
einem Gehäuse (3)
einem Hydraulikzylinder (4),
einem vorzugsweise manuell bedienbaren, hydraulischen Steuerventil (5),
zwei mit einer Drehachse (6) verbundene Werkzeughälften, die jeweils ein Schermesser (2) umfassen,
**dadurch gekennzeichnet, dass**
als Schermesser (2) ein Schermesser (2) nach mindestens einem der vorhergehenden Ansprüche vorgesehen ist.

## Claims

1. Shearing blade (2) for a portable, especially hydraulic, cutting device, preferably rescue equipment,
having a blade body (9), wherein the blade body (9) has an assembly region (18) and also a cutting region (15);
having a cutting edge (16) in the cutting region (15);
having a contact surface (13), which is located on the one side of the cutting edge (16) and is intended for a further shearing blade, and also an outer surface (14), which is located on the other side of the cutting edge (16) and is intended to act on the item(s) to be cut;
wherein a first surface portion (17a) of the outer surface (14) extends away from the cutting edge (16) along the orthogonal O, which meets the contact surface (13) in the region of the cutting edge (16), or wherein a first surface portion (17a) of the outer surface (14) extends away from the cutting edge (16) at an acute angle α relative to the orthogonal O;
wherein a second surface portion (17b) adjoins the end of the first surface portion (17a) and is oriented at an acute angle β relative to the orthogonal O;
wherein a third surface portion (17c) adjoins the end of the second surface portion (17b) and is oriented at an acute angle γ relative to the orthogonal O, wherein
the angle α is smaller than the angle β, and the angle β is smaller than the angle γ, **characterized in that**
surface profiling (19) is provided only in the region of the second and/or the third surface portion (17b, 17c) of the outer surface (14), preferably in the region of both surface portions (17b, 17c) of the outer surface (14), wherein the surface profiling (19) comprises individual grooves (20) running next to one another.

2. Shearing blade according to Claim 1, **characterized in that**, when viewed in each case in the cross section of the shearing blade, the width of the first surface portion (17a) is smaller than the width of the second surface portion (17b), and the width of the second surface portion (17b) is smaller than the width of the third surface portion (17c).

3. Shearing blade according to Claim 1 or 2, **characterized in that** the angle α ranges from 0.5° to 5°, preferably ranges from 1° to 3°, particularly preferably ranges from 1.5° to 2.5°.

4. Shearing blade according to at least one of the preceding claims, **characterized in that** the angle γ is larger than/equal to 45°, preferably larger than/equal to 48°, particularly preferably larger than/equal to 50°.

5. Shearing blade according to Claim 1, **characterized in that** the surface profiling (19) extends over the entire width of the respective surface portion (17b and/or 17c).

6. Shearing blade according to Claim 1, **characterized in that** the grooves (20) each have two opposite groove walls (20a, 20b), one groove wall (20a) being steep, preferably curved, and the other groove wall (20b) being flattened, wherein the steep groove wall (20a) is arranged on that side of the respective groove (20) that faces the blade tip (9a) of the shearing blade (2).

7. Shearing blade according to Claim 1 or 6, **characterized in that** the groove (20) is u-shaped, v-shaped or trapezoidal.

8. Shearing blade according to at least one of the preceding claims, **characterized in that** the cutting edge (16) is curved concavely.

9. Shearing blade according to at least one of the preceding claims, **characterized in that** the assembly region (18) is provided with a through-opening (11) for receiving an axial-pivot element common to a pair of shearing blades and also a through-opening (12) for a drive-proximal activating element.

10. Shearing blade according to at least one of the preceding claims, **characterized in that** the cutting region (15) has a recess (22) for receiving a cutting insert (21).

11. Shearing blade according to Claim 10, **characterized in that** the recess (22) is designed in such a manner that the cutting insert (21) is able to be inserted into the recess (22) at an acute angle δ relative to the contact surface (13) of the shearing blade (2).

12. Shearing blade according to Claim 10 or 11, **characterized in that** provided is at least one fastening element (23), the orientation of which runs at an oblique angle ε relative to the contact surface (13), preferably at an acute angle ε relative to the contact surface (13), when viewed in the direction of the cutting edge (16).

13. Shearing blade according to one of Claims 10 to 12, **characterized in that** an undercut (24a, 24b) is provided on at least one side, preferably on both sides, of the recess (22).

14. Portable, in particular hydraulic, cutting device (1), preferably rescue equipment, for portable use, having
a housing (3),
a hydraulic cylinder (4),
a preferably manually operable hydraulic control valve (5),
two tool halves which are connected to an axial pivot (6) and each comprise a shearing blade (2),
**characterized in that**
a shearing blade (2) according to at least one of the preceding claims is provided as a shearing blade (2).

## Revendications

1. Lame de cisaillement (2) pour un appareil de coupe portable, en particulier hydraulique, de préférence un appareil de sauvetage,
présentant un corps (9) de lame, le corps (9) de lame présentant une zone de montage (18) ainsi qu'une zone de coupe (15),
présentant une arête de coupe (16) dans la zone de coupe (15) ;
présentant une surface d'appui (13) se trouvant sur un côté de l'arête de coupe (16) pour une autre lame de cisaillement ainsi qu'une surface externe (14), se trouvant sur l'autre côté de l'arête de coupe (16) et prévue pour agir sur le produit à couper ;
dans laquelle une première section de surface (17a) de la surface externe (14) s'éloigne de l'arête de coupe (16) le long de l'orthogonale O, qui rencontre la surface d'appui (13) dans la zone de l'arête de coupe (16), ou une première section de surface (17a) de la surface externe (14) s'éloigne de l'arête de coupe (16) selon un angle aigu α par rapport à l'orthogonale O ;
dans laquelle une deuxième section de surface (17b) se rattache à l'extrémité de la première section de surface (17a) et est orientée selon un angle aigu β par rapport à l'orthogonale O ;
dans laquelle une troisième section de surface (17c) se rattache à l'extrémité de la deuxième section de surface (17b) et est orientée selon un angle aigu γ par rapport à l'orthogonale O,
l'angle α étant inférieur à l'angle β et l'angle β étant inférieur à l'angle γ, **caractérisée en ce que**
un profil de surface (19) est prévu uniquement dans la zone de la deuxième et/ou de la troisième section de surface (17b, 17c) de la surface externe (14), de préférence dans la zone des deux sections de surface (17b, 17c) de la surface externe (14), le profil de surface (19) comprenant des rainures (20) individuelles s'étendant les unes à côté des autres.

2. Lame de cisaillement selon la revendication 1, **caractérisée en ce que**, à chaque fois considérée en coupe transversale de la lame de cisaillement, la largeur de la première section de surface (17a) est inférieure à la largeur de la deuxième section de surface (17b) et la largeur de la deuxième section de surface (17b) est inférieure à la largeur de la troisième section de surface (17c).

3. Lame de cisaillement selon la revendication 1 ou 2, **caractérisée en ce que** l'angle α se situe dans une plage de 0,5° à 5°, de préférence dans une plage de 1° à 3°, de manière particulièrement préférée dans une plage de 1,5° à 2,5°.

4. Lame de cisaillement selon au moins l'une des revendications précédentes, **caractérisée en ce que** l'angle γ est supérieur/égal à 45°, de préférence supérieur/égal à 48°, de manière particulièrement préférée supérieur/égal à 50°.

5. Lame de cisaillement selon la revendication 1, **caractérisée en ce que** le profil de surface (19) s'étend à chaque fois sur la largeur complète de la section de surface respective (17b et/ou 17c).

6. Lame de cisaillement selon la revendication 1, **caractérisée en ce que** les rainures (20) présentent à chaque fois deux parois (20a, 20b) de rainure opposées, une paroi (20a) de rainure s'étend de manière raide, de préférence incurvée, et l'autre paroi (20b) de rainure s'étend de manière aplatie, la paroi (20a) de rainure s'étendant de manière raide étant agencée sur le côté de la rainure (20) respective qui est orienté vers la pointe (9a) de lame de la lame de cisaillement (2).

7. Lame de cisaillement selon la revendication 1 ou 6, **caractérisée en ce que** la rainure (20) est réalisée en forme de U, en forme de V ou en forme trapézoïdale.

8. Lame de cisaillement selon au moins l'une des revendications précédentes, **caractérisée en ce que** l'arête de coupe (16) est incurvée de manière concave.

9. Lame de cisaillement selon au moins l'une des revendications précédentes, **caractérisée en ce que** la zone de montage (18) est pourvue d'une ouverture de passage (11) pour la réception d'un élément d'axe de rotation commun à une paire de lames de cisaillement et d'une ouverture de passage (12) pour un élément d'actionnement côté entraînement.

10. Lame de cisaillement selon au moins l'une des revendications précédentes, **caractérisée en ce que** la zone de coupe (15) présente un évidement (22) destiné à recevoir un insert de coupe (21).

11. Lame de cisaillement selon la revendication 10, **caractérisée en ce que** l'évidement (22) est conçu de telle sorte que l'insert de coupe (21) peut être inséré dans l'évidement (22) selon un angle aigu δ par rapport à la surface d'appui (13) de la lame de cisaillement (2).

12. Lame de cisaillement selon la revendication 10 ou 11, **caractérisée en ce qu'**au moins un élément de fixation (23) est prévu, dont l'orientation s'étend selon un angle oblique ε par rapport à la surface d'appui (13), de préférence selon un angle aigu ε par rapport à la surface d'appui (13), considérée en direction de l'arête de coupe (16).

13. Lame de cisaillement selon l'une des revendications 10 à 12, **caractérisée en ce qu'**une contre-dépouille (24a, 24b) est prévue au niveau d'au moins un, de préférence au niveau des deux côtés de l'évidement (22).

14. Appareil de coupe (1) portatif, en particulier hydraulique, pour une utilisation portable, de préférence appareil de sauvetage, présentant
un boîtier (3),
un vérin hydraulique (4),
une vanne de commande (5) hydraulique, de préférence actionnable manuellement,
deux moitiés d'outil reliées par un axe de rotation (6), qui comprennent à chaque fois une lame de cisaillement (2),
**caractérisé en ce que**
une lame de cisaillement (2) selon au moins l'une des revendications précédentes est prévue en tant que lame de cisaillement (2).
